(19) Europäisches Patentamt / European Patent Office / Office européen des brevets

(11) **EP 3 955 151 A1**

(12) **EUROPEAN PATENT APPLICATION**

(43) Date of publication:
**16.02.2022 Bulletin 2022/07**

(21) Application number: **21191141.7**

(22) Date of filing: **12.08.2021**

(51) International Patent Classification (IPC):
**G06F 21/62** (2013.01)    **H04W 12/02** (2009.01)
**G06N 20/00** (2019.01)

(52) Cooperative Patent Classification (CPC):
**G06F 21/6254; G06N 20/00; H04W 12/02**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.08.2020 US 202063064686 P**

(71) Applicant: **Replica Analytics**
**Ottawa, Ontario K1P 5J6 (CA)**

(72) Inventors:
- **JIANG, Yangdi**
  **Ottawa, K1P 5J6 (CA)**
- **JIANG, Bei**
  **Ottawa, K1P 5J6 (CA)**
- **KONG, Linglong**
  **Ottawa, K1P 5J6 (CA)**
- **EL EMAM, Khaled**
  **Ottawa, K1P 5J6 (CA)**

(74) Representative: **Cobbold, Alistair John et al**
**Kilburn & Strode LLP**
**Lacon London**
**84 Theobalds Road**
**London WC1X 8NL (GB)**

(54) **RE-IDENTIFICATION RISK ASSESSMENT USING A SYNTHETIC ESTIMATOR**

(57) A risk of re-identifying a particular individual associated with a record in a dataset can be assessed by synthesizing a dataset from a dataset to be shared and then sampling a synthetic microdata dataset from the synthetic dataset. The synthetic dataset and the synthetic microdata dataset can then be used to estimate the risk of re-identifying an individual from the dataset to be shared.

FIG. 2

EP 3 955 151 A1

**Description**

**RELATED APPLICATIONS**

The current application claims priority to US Provisional Patent Application 63/064,686 filed August 12, 2020, the entire contents of which are incorporated herein by reference.

**BACKGROUND**

Access to data may be key to fighting the COVID-19 pandemic, especially since AI methods that are being applied to analyze COVID-19 data require larger volumes of data. However, due to privacy concerns some governments have begun to reduce the amount of information being shared about COVID cases.

To be able to manage privacy risks when sharing health data, in the context of the COVID-19 pandemic and more broadly for any research or releasing of health data, it is necessary to be able to measure the re-identification risk of the dataset being shared. By measuring re-identification risk, a data custodian can apply various algorithms to reduce that risk to an acceptable value.

One common way to share health data for secondary analysis while meeting increasingly strict privacy regulations is to de-identify it. To demonstrate that the risk of re-identification is acceptably low, re-identification risk metrics are used. There is a dearth of good risk estimators modeling the attack scenario where an adversary selects a record from the microdata sample and attempts to match it with individuals in the population.

The re-identification risk may be considered as the probability of an adversary matching a record in the dataset with a real person. A large body of work has been developed in the disclosure control literature to estimate this parameter. One of the more common ways to assess re-identification risk is to measure population uniqueness. However, while population uniqueness is an indicator of re-identification risk, it does not fit a specific adversary attack scenario. Further, it is possible to have data with low population uniqueness but still have a quite high re-identification risk. For example, a dataset with zero population uniqueness value could have a mean or maximum probability of re-identifying a record as high as 0.5. Such a value is much higher than the 0.09 commonly recommended thresholds by regulators.

Another estimator that has produced good results is conditioned on the records in the shared dataset being unique using log-linear models. However, the risk of re-identification can be high even when the sample records are not unique. Therefore, managing re-identification risk based on this metric will not ensure that the overall data risk is acceptably small. For example, if all of sample records are doubles then the population risk can be as high as 0.5 again.

Another estimator takes a similar approach as the one above but considers a Bayesian approach rather than the log-linear approach. The method provides an estimate of risk for individual records rather than an estimate for the whole dataset. When individual record estimates are aggregated to the whole dataset, the individual estimation errors are amplified.

Other earlier estimators of dataset risk that have been applied to health and other types of data can make a conservative maximum risk assumption and may tend to overestimate quite considerably for small sampling fractions.

An additional, alternative and/or improved method of determining a re-identification risk of a dataset is desirable.

**SUMMARY**

In accordance with the present disclosure, there is provided a computer implemented method of estimating a re-identification risk by an attacker comprising: receiving a dataset to be shared of a population having a population size (N), the dataset comprising a plurality (n<N) of records each comprising a plurality of variables, a subset of the variables (quasi-identifiers) comprising data that may be known to the attacker; generating a synthetic dataset from the received dataset, the synthetic dataset comprising N records; generating a synthetic microdata dataset by sampling the synthetic dataset; estimating an equivalence class size in the synthetic population dataset of records in the synthetic microdata dataset; determining the re-identification risk based on the population equivalence class size of records in the synthetic microdata dataset.

In a further embodiment of the method, determining the re-identification risk is based on an estimate of a sample-to-population match rate and comprises: estimating the sample-to-population match rate according to:

$$\hat{B} = \frac{1}{n} \sum_{k=1}^{n} \frac{1}{\widehat{F_k}},$$

where: $\hat{B}$ is the estimate of the sample-to-population match rate; $n$ is the size of the synthetic microdata dataset; and $\widehat{F_k}$ is the size of the equivalence class in the synthetic dataset that record $k$ of the synthetic microdata dataset belongs to.

In a further embodiment of the method, the method further comprises: estimating an equivalence class size in the synthetic microdata dataset of records in the synthetic microdata dataset, wherein determining the re-identification risk is further based on an estimate of a population-to-sample match rate and comprises: estimating the population-to- sample match rate according to:
$$\hat{A} = \frac{1}{N} \sum_{k=1}^{n} \frac{1}{f_k}$$
, where: $\hat{A}$ is the estimate of the population-to-sample match rate; $N$ is the size of the synthetic dataset; $n$ is the size of the synthetic microdata dataset; and $f_k$ is the size of the equivalence class in the synthetic microdata dataset that record k of the synthetic microdata dataset belongs to.

In a further embodiment of the method, the re-identification risk is determined according to: $\max(\hat{A}, \hat{B})$.

In a further embodiment of the method, the re-identification risk is determined according to: $1 - (1 - \hat{A})(1 - \hat{B})$.

In a further embodiment of the method, generating the synthetic dataset from the received microdata dataset uses a copula fitting process.

In a further embodiment of the method, the copula is a Gaussian copula or a D-vine copula.

In a further embodiment of the method, generating the synthetic dataset from the received microdata dataset uses an average of a Gaussian copula fitting process and a D-vine copula fitting process.

In a further embodiment of the method, generating the synthetic dataset from the received microdata dataset uses at least one of: a sequential decision tree process; a copula fitting process; a Gaussian copula fitting process; a d-vine copula fitting process; a deep learning process; and Bayesian Networks.

In a further embodiment of the method, the method further comprises: determining if the re-identification risk is acceptable for sharing of the received microdata dataset of the population; when the re-identification risk is not acceptable for sharing, modifying the received microdata dataset and determining the re-identification risk of the modified microdata data set.

In accordance with the present disclosure, there is provided a non-transitory computer readable medium having instructions, which when executed by a processor of a computer configure the computer to perform a method of estimating a re-identification risk by an attacker, the method comprising: receiving a dataset to be shared of a population having a population size (N), the dataset comprising a plurality (n<N) of records each comprising a plurality of variables, a subset of the variables (quasi-identifiers) comprising data that may be known to the attacker; generating a synthetic dataset from the received dataset, the synthetic dataset comprising N records; generating a synthetic microdata dataset by sampling the synthetic dataset; estimating an equivalence class size in the synthetic population dataset of records in the synthetic microdata dataset; determining the re-identification risk based on the population equivalence class size of records in the synthetic microdata dataset.

In a further embodiment of the computer readable medium, determining the re-identification risk is based on an estimate of a sample-to-population match rate and comprises: estimating the sample-to-population match rate according to:
$$\hat{B} = \frac{1}{n} \sum_{k=1}^{n} \frac{1}{\widehat{F_k}}$$
, where: $\hat{B}$ is the estimate of the sample-to-population match rate; $n$ is the size of the synthetic microdata dataset; and $\widehat{F_k}$ is the size of the equivalence class in the synthetic dataset that record $k$ of the synthetic microdata dataset belongs to.

In a further embodiment of the computer readable medium, the method further comprises: estimating an equivalence class size in the synthetic microdata dataset of records in the synthetic microdata dataset, wherein determining the re-identification risk is further based on an estimate of a population-to-sample match rate and comprises: estimating the population-to- sample match rate according to:
$$\hat{A} = \frac{1}{N} \sum_{k=1}^{n} \frac{1}{f_k}$$
, where: $\hat{A}$ is the estimate of the population-to-sample match rate; $N$ is the size of the synthetic dataset; $n$ is the size of the synthetic microdata dataset; and $f_k$ is the size of the equivalence class in the synthetic microdata dataset that record k of the synthetic microdata dataset belongs to.

In a further embodiment of the computer readable medium, the re-identification risk is determined according to: $\max(\hat{A}, \hat{B})$.

In a further embodiment of the computer readable medium, the re-identification risk is determined according to: $1 - (1 - \hat{A})(1 - \hat{B})$.

In a further embodiment of the computer readable medium, generating the synthetic dataset from the received microdata dataset uses a copula fitting process.

In a further embodiment of the computer readable medium, the copula is a Gaussian copula or a D-vine copula.

In a further embodiment of the computer readable medium, generating the synthetic dataset from the received microdata dataset uses an average of a Gaussian copula fitting process and a D-vine copula fitting process.

In a further embodiment of the computer readable medium, generating the synthetic dataset from the received microdata dataset uses a sequential decision tree process.

In a further embodiment of the computer readable medium, wherein the method further comprises: determining if the re-identification risk is acceptable for sharing of the received microdata dataset of the population; when the re-identification risk is not acceptable for sharing, modifying the received microdata dataset and determining the re-identification risk of the modified microdata data set.

In accordance with the present disclosure, there is provided a computing system comprising: a processor for executing instructions; and a memory for storing instructions, which when executed by the processor configure the computing system to perform a method of estimating a re-identification risk by an attacker, the method comprising: receiving a dataset to be shared of a population having a population size (N), the dataset comprising a plurality (n<N) of records each comprising a plurality of variables, a subset of the variables (quasi-identifiers) comprising data that may be known to the attacker; generating a synthetic dataset from the received dataset, the synthetic dataset comprising N records; generating a synthetic microdata dataset by sampling the synthetic dataset; estimating an equivalence class size in the synthetic population dataset of records in the synthetic microdata dataset; determining the re-identification risk based on the population equivalence class size of records in the synthetic microdata dataset.

## BRIEF DESCRIPTION OF THE DRAWINGS

Further features and advantages of the present disclosure will become apparent from the following detailed description, taken in combination with the appended drawings, in which:

FIG. 1 depicts a structure of a d-vine copula;

FIG. 2 depicts an application of re-identification risk assessment;

FIG. 3 depicts a method of re-identification risk assessment;

FIG. 4 depicts a further method of re-identification risk assessment;

FIG. 5 depicts the estimation error for the Texas hospitals 2007 dataset at the 0.05 sampling fraction;

FIG. 6 depicts the estimation error for the Texas hospitals 2007 dataset at the 0.3 sampling fraction;

FIG. 7 depicts the estimation error for the Texas hospitals 2007 dataset at the 0.7 sampling fraction;

FIG. 8 depicts the estimation error for the Nexoid dataset at the 0.05 sampling fraction;

FIG. 9 depicts the estimation error for the Nexoid dataset at the 0.3 sampling fraction; and

FIG. 10 depicts the estimation error for the Nexoid dataset at the 0.7 sampling fraction.

## DETAILED DESCRIPTION

A new estimator of re-identification risk is described further below that is based on data synthesis and that models adversarial attack scenarios and provide an estimate of the re-identification risk for a dataset that is being shared. The assessment can provide an estimate of the probability that a random record selected from a dataset to be shared can be correctly matched to a record or individual in the population from which the dataset to be shared comes from. The risk estimate can be used to determine whether to share the dataset or whether further de-identification of the dataset should be made prior to sharing. The risk assessment can be performed with only knowledge of the received dataset being assessed as well as the population size. The dataset being assessed is used to generate a synthetic dataset that has the same number of records as the population size. The generated synthetic population-sized dataset can then be sampled to generate a sampled synthesized dataset that has a number of records equal to the number of records in the dataset to be shared. The synthesized datasets are used in determining the re-identification risk.

The re-identification risk assessment is described with reference to sharing health data, although it could be applied to any dataset that should be anonymized to a certain degree prior to sharing.

To be able to manage privacy risks when sharing health data, in the context of the COVID-19 pandemic and more broadly to share such data with the research community, it is necessary to be able to measure the re-identification risk of the dataset being shared. For example, under the US HIPAA Privacy Rule expert determination method, the risk needs to be "very small" that the information could be used, alone or in combination with other reasonably available information, by an anticipated recipient, to identify an individual Recent guidance from the Ontario Information and Privacy Commissioner's Office indicates that the risk of identification of individuals in data should be determined to be "very low" or "very small" prior to the data being released. To enable the precise and repeatable assessment of terms such as "reasonable", "reasonably likely", "serious possibility", "very low", "very small", or "acceptably small", quantitative measures of risk are necessary. By measuring re-identification risk, a data custodian can apply various algorithms to reduce that risk to an acceptable value. Absent reliable measurement, it is difficult to know whether the re-identification risk meets any of these standards, and whether methods for the de-identification of health data is adequate or not.

Re-identification risk may be defined as the probability of an adversary correctly matching a record in the dataset with a real person. The current re-identification risk assessment provides an estimation of identity disclosure risk for datasets rather than for individual records in a dataset. If a dataset is deemed to have a low risk, then it can be treated as non-personal information and can be used and disclosed without additional patient consent.

When an adversary is attempting to match records in a dataset to individuals in the population, the attacker does so using a subset of the variables in the dataset that are, or may be, knowable. This subset may be referred to as the quasi-identifiers. Examples of quasi-identifiers include, date of birth, gender, race, main language spoken, and level of education. These are knowable because they are likely to be known by an acquaintance of someone in the dataset or they exist in public registries, such as voter registration lists. More generally, an adversary may know the quasi-identifiers about an individual because that individual is an acquaintance of the adversary, or because the adversary has access to a population database or registry of identifiable information. It will be appreciated that the quasi-identifiers may include other variables than those noted above depending upon the dataset and knowledge assumed of the attacker.

In the following description, it is assumed that the dataset to be shared is a sample from some population. This dataset may be referred to as a microdata dataset of the population. For example the original population dataset may have 1,000,000 records and the dataset to be shared may have a 10,000 records sampled from the original population dataset. It will be appreciated that these numbers are only examples and the number of records can vary widely, although the original population dataset will be larger, or have more records, than the dataset to be shared.

The method described further below synthesizes a population dataset from the dataset to be shared using data synthesis methods such as copula, such as Gaussian copula or D-vine copula, fitting methods and/or tree-based synthesis methods, however other data synthesis techniques may be used including, for example to deep learning methods and Bayesian Networks. The risk assessment method was empirically evaluated on four datasets and compared to previous approaches. The results demonstrate very high re-identification risk estimation accuracy.

In considering the re-identification risk, two risk metrics are considered that are modeled after specific attacks. The first is referred to a population-to-sample attack and the second is referred to as a sample-to-population attack.

In a population-to-sample attack the attacker selects an individual from the population and tries to match that individual on the quasi-identifiers with records in the dataset being shared. A natural metric for measuring population-to-sample risk is the expected value of the probability that a population record is successfully matched to the corresponding record in the sample dataset. Suppose the adversary chooses a record $k$ in the population that belongs to an equivalence class of size $F_k$, and the record $k$ belongs to the equivalence class of size $f_k$ in the sample, with $0 \leq f_k \leq F_k$.

To achieve a successful match, there are 2 necessary conditions:

1. $0 < f_k$

2. The record $k$ must be inside of the $f_k$ records in the sample.

Assuming equal probability of selection, the probability of conditions 2 can be computed as follow:

$$\frac{\binom{F_k - 1}{f_k - 1}}{\binom{F_k}{f_k}} = \frac{f_k}{F_k}$$

Given the 2 conditions have been satisfied, the probability of a successful match is $\dfrac{1}{f_k}$, again assuming equal probability of selection. The above results in the following formula:

$$A = \frac{1}{N} \sum_{k=1, f_k \neq 0}^{N} \frac{f_k}{F_k} \times \frac{1}{f_k}$$

$$= \frac{1}{N} \sum_{k=1, f_k \neq 0}^{N} \frac{1}{F_k}$$

$$= \frac{1}{N} \sum_{\{k | f_k \neq 0\}} \frac{1}{F_k}$$

$$= \frac{L - L_1}{N}$$

$$= \frac{K}{N}$$

$$= \frac{1}{N} \sum_{k=1}^{n} \frac{1}{f_k}$$

where $L$ is the number of equivalence classes in the population, $L_1$, is the number of equivalence classes in the population that do not have a corresponding equivalence class in the sample, and $K$ is the number of equivalence classes in the sample. Accordingly, the match rate for such population-to-sample attacks is given by:

$$A = \frac{1}{N} \sum_{k=1}^{n} \frac{1}{f_k}, \tag{1}$$

where:

- $A$ is the population-to-sample match rate;
- $N$ is the number of records in the population;
- $n$ is the size of the dataset being shared;
- $k$ is an index for records in the sampled dataset being shared; and
- $f_k$ is the size of the equivalence class in the dataset being shared that record $k$ of the dataset being shared belongs to.

Equation (1) gives the probability that a random individual selected from the population can be correctly matched with their record in the dataset being shared, which is sampled from the population. It is noted that a selected individual from the population may not be in the sampled dataset being shared, and therefore the fact that the dataset is a sample from the larger population does have a protective effect for re-identification risks.

In a sample-to-population attack, the adversary randomly selects a record from the sampled dataset to be shared and matches it to individuals in the population. A natural metric for measuring sample-to-population risk is the expected value of the probability that a sample record is successfully matched to the corresponding record in the population. The derivation of the sample-to-population risk is simpler than for $A$ set forth above since every sample record must exist in the population.

- Assuming a sample record is uniformly randomly selected, the probability of selecting a sample record is $\frac{1}{n}$.

- Suppose a sample record $k$ is selected, assuming no additional information 1 available, the probability of a successful match is $\frac{1}{F_k}$

Therefore,

$$B = \sum_{k=1}^{n} \frac{1}{n} \times \frac{1}{F_k}$$
$$= \frac{1}{n} \sum_{k=1}^{n} \frac{1}{F_k}$$

Accordingly, the sample-to-population match rate is given by:

$$B = \frac{1}{n} \sum_{k=1}^{n} \frac{1}{F_k}, \tag{2}$$

where:

- $B$ is the sample-to-population match rate;
- $n$ is the size of the dataset being shared;
- $k$ is an index for records in the sampled dataset being shared; and
- $F_k$ is the size of the equivalence class in the population that record k of the sampled dataset being shared belongs to.

Equation (2) gives the probability that a random individual selected from the sampled dataset to be shared can be correctly matched with their record (or person) in the population.

The risk values of equations (1) and (2) are not conditional on whether an equivalence class is unique in the real dataset or not. The parameters in equation (1) can be easily computed from the sampled dataset to be shared directly and using knowledge of the population size (i.e., the value of N, which is assumed to be known). However, the parameters in equation (2) must be estimated because $F_k$ is unknown. Rather than determining the actual sample-to-population match rate ($B$) from the actual population and dataset sampled from the population, the current approach generates a synthetic dataset from the sampled dataset and then generates a synthetic sampled dataset from the synthetic dataset. The synthetic dataset and the sampled synthetic dataset are then used in place of the population and sampled dataset in estimating the sample-to-population match rate ($\hat{B}$). Advantageously, the sample-to-population match rate can be estimated using the sampled dataset of the population being shared.

The risk values of equations (1) and (2) may be used individually to provide a re-identification risk or may be combined together. For example, the re-identification risk may be determined as the maximum between the two values from equations (1) and (2) (i.e. max($A$, $B$)). Alternatively, the re-identification risk may be determined as the probability that an adversary will attempt at least one of the two attacks (i.e. 1 -(1 - $A$)(1 - $B$)).

The process may receive a dataset, $D_r$, that is to be shared. The dataset $D_r$ has a number $n$ of records sampled from a larger population of size $N$, where $N < n$. The dataset $D_r$ is used to synthesize a synthetic dataset, $D_p$, which has the same size $N$, or number of records, as the population. Rather than using $D_r$ and $D_p$ in equations (1) and (2), the current approach uses the synthetic dataset $D_p$ to then sample synthetic dataset, $D_s$, from $D_p$ and having the same size $n$ as the received dataset $D_r$. $D_s$ may be generated from $D_p$ using random sampling to sample the $n$ records from the synthetic population dataset $D_p$.

Once the synthetic population dataset $D_p$ of size $N$ and the synthetic sampled dataset of size $n$ are generated, the value of $\hat{B}$ can be determined according to:

$$\hat{B} = \frac{1}{n} \sum_{k=1}^{n} \frac{1}{\widehat{F_k}}, \tag{3}$$

where:

- $\hat{B}$ is the estimate of the sample-to-population match rate based on $D_p$ and $D_s$;

- $n$ is the size of $D_s$, which also corresponds to the size of the dataset being shared;

- $k$ is an index for records in the sampled synthetic dataset $D_s$; and

- $\widehat{F_k}$ is the size of the equivalence class in the synthetic population dataset $D_p$ that record k of the sampled synthetic

dataset $D_s$ belongs to.

The process described herein simulates the population using data synthesis from the sampled dataset to be shared, and then drawing a synthetic microdata sample from that synthetic population to get a simulated microdata sample dataset. These two synthetic datasets are then used to compute the re-identification risk estimator.

The process may use copulas to synthesize $D_p$ from the received dataset to be shared. Copulas are flexible models that link univariate marginal distributions to form a multivariate distribution. This multivariate distribution captures the dependence structure among variables. These models can be used to simplify the modelling and sampling of multivariate data. The data synthesis using two different copulas, a Gaussian copula and a vine copula, are described in further detail below. Additionally or alternatively, the process may use other data synthesis techniques for the data synthesis of $D_p$, such as for example sequential data trees, deep learning methods and Bayesian Networks. $D_p$ may be generated as an average of datasets synthesized using different techniques.

The synthesis of $D_p$ may be done using a Gaussian copula fitting process. The process may be done in various ways. For example, the individual variables of the quasi-identifier may each be fit to a counting distribution. The counting distribution may be fit based on BIC from a plurality pre-specified distributions, including for example, a categorical distribution, a logarithm series distribution, a negative binomial distribution and/or a geometric distribution. Once every variable is fitted with a distribution, a covariance matrix for the Gaussian copula is estimated.

The covariance matrix for the Gaussian copula can be estimated bivariately. For instance, given a dataset with $m$ variables, instead of estimating the covariance matrix, $m*(m$-1)/2 covariance coefficients can be estimated separately. To estimate the covariance coefficient for each pair, the following method can be used. Given a covariance coefficient for the given pair, randomly draw a sample of size $n$ from the bivariate distribution given the distributions previously fitted and the covariance. Compute the mutual information for the sample and choose the covariance coefficient that yields the highest mutual information. The method is repeated for every pair of variables. Once the $m*(m$-1)/2 covariance coefficients have been estimated, the covariance matrix that was constructed is verified to be positive definite. If the matrix is not positive definite, the nearest positive definite matrix is chosen. The Gaussian copula may be fully defined from the covariance matrix.

It will be appreciated that other techniques for fitting the copula, whether a Gaussian copula or D-vine copula, may be used.

A Gaussian copula models a series of $n$ variables as an m-dimensional multivariate Gaussian distribution. One benefit of using a Gaussian copula rather than a traditional multivariate normal distribution is that each variable does not need to be normally distributed initially. In the current work, each variable has an empirical cumulative density function fit using the sample data which may then transformed to the standard normal using the inverse quantile function for the standard normal distribution. This means that this model does not make a strong distributional assumption about the data it models. Synthetic population samples may be generated from sampling from the m-dimensional multivariate Gaussian distribution, then applying the standard normal quantile function and the inverse of the empirical cumulative density function to each dimension, yielding a synthetic sample in the original data space. The dependence between variables $i$ and $j$ can be estimated by the correlation coefficient $\rho_{ij}$ where the optimal value for $\rho_{ij}$ is the value which minimizes the difference between the mutual information in the real data sample and the mutual information in a synthetic data sample.

While a Gaussian copula may be fitted as described above, a further step-by-step process for fitting a Gaussian copula is described below.

For each variable $X_i$, a marginal empirical distribution $\hat{F}_i$ is fitted. \he correlation matrix is estimated across all variables previously fitted as follows:

a. The fitted marginal empirical Cumulative Distribution Function (CDF) previously fitted is applied to each variable $\hat{F}_i(X_i)$, and then the quantile function for the standard normal is applied, $\Phi^{-1}(\hat{F}_i(X_i))$.

b. For each pair of variables $X_i$ and $X_j$, the correlation parameter is estimated between these two variables using the following procedure:

i. Choose the correlation parameter $\rho_{ij}$ such that the following quantity is minimized.

ii. Given a correlation parameter $\rho_{ij}$, draw a sample of size $n$ from the bivariate Gaussian distribution with mean vector 0 and covariance matrix:

$$\begin{bmatrix} 1 & \rho_{ij} \\ \rho_{ij} & 1 \end{bmatrix}$$

iii. Denote the sample by $(\hat{X}_i, \hat{X}_j)$, then apply $\Phi$ and $\hat{F}_i^{-1} / \hat{F}_j^{-1}$ to the sample, $\left( \hat{F}_i^{-1}(\Phi(\hat{X}_i)), \hat{F}_j^{-1}(\Phi(\hat{X}_j)) \right)$. The empirical mutual information is computed for these transformed quantities, $\hat{I}_{ij}$.

iv. Compute the empirical mutual information for the original data $(X_i, X_j)$, denoted by $I_{ij}$.

v. Choose the parameter $\rho_{ij}$ such that $(\hat{I}_{ij} - I_{ij})^2$ is minimized. This can be accomplished using an optimization method. In particular, the method used is a combination of golden section search and successive parabolic interpolation.

c. Repeat the correlation parameter estimation for every pair of variables.

d. Once the $\dfrac{m(m-1)}{2}$ correlation parameters have been estimated (where $m$ is the number of quasi-identifiers), the correlation matrix constructed is verified to be positive semi-definite. If the matrix is not positive semi-definite, the nearest (w.r.t sup norm) positive semi-definite matrix is chosen.

Once the correlation matrix is fitted as above, it is possible to sample from the fitted Gaussian copula distribution as follow,

a. First, sample from a multivariate Gaussian distribution with mean vector 0 and the correlation matrix fitted above, denote this sample by $(Y_i,...,Y_m)$

b. Then, apply standard normal CDF to the sample, $(\Phi(Y_i),..., \Phi(Y_m))$.

c. Lastly, apply the fitted marginal quantile function, $\left( \hat{F}_i^{-1}(\Phi(Y_i)),...,\hat{F}_m^{-1}(\Phi(Y_m)) \right)$, to obtain the synthetic data values.

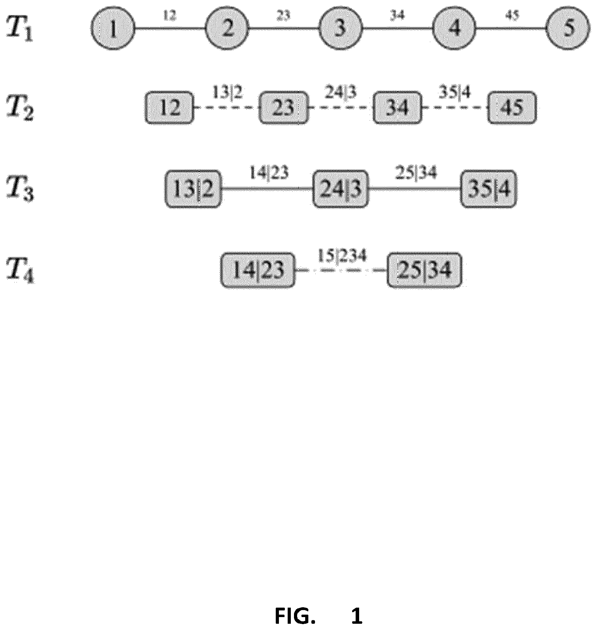

The above has described fitting of a Gaussian copula. A d-vine copula may also be used. The d-vine copula models $m$ variables using a series of pairwise bivariate Gaussian copulas where the pattern of bivariate copulas is described by a vine structure. A vine structure is a hierarchy of trees that describe conditional dependence between variables. This modelling strategy is particularly effective at modelling more complicated dependence relationships than the Gaussian copula. Fig. 1 depicts a structure of a d-vine copula.

When fitting the vine copula, for each variable $X_i$, a marginal empirical distribution $\hat{F}_i$ is fitted. To model the dependence relations between variables, a vine copula approach is used. Instead of modeling a multivariate copula directly, a vine copula approach decomposes the multivariate copula into a sequence of bivariate copulas by conditioning on different variables. To fit a vine copula, it requires the specification of a vine structure and one bivariate distribution fitted for each edge of the vine structure.

a. A vine structure comprises a collection of trees. The edges in the previous tree become the nodes for the next tree. A vine structure specifies how each pair of variables depends on other variables. To specify the vine structure, a regular vine (that is, a vine that satisfies certain regularity conditions) is used. There are many possible such vines. In the current approach, the d-vine is used due to its simplicity. Fig. 1 depicts an example of a d-vine for 5 variables. Each edge in the diagram represents a bivariate relation. For example, the edge "12" in the first tree $T_1$ indicates the dependence relation between variable 1 and variable 2 should be modeled without conditioning on other variables. On the other hand, the edge "15|234" in the last tree $T_4$ indicates that the dependence relation between variable 1 and variable 5 should be modeled while conditioning on variable 2, 3 & 4.

b. Once the vine structure is specified, a bivariate Gaussian copula, which is characterized by its correlation parameter, is fitted for each edge as follow. For instance, consider the edge "13|2" in tree $T_2$ of Fig. 1,

i. Applying the empirical CDF $\hat{F}_1, \hat{F}_3$ to variable $X_1, X_3$, to provide $\hat{F}_1(X_1), \hat{F}_3(X_3)$.

ii. Choose the correlation parameter $\rho_{13|2}$ such that the following quantity is minimized.

iii. Given a correlation parameter $\rho_{13|2}$, draw a sample of size $n$ from the bivariate Gaussian distribution with mean vector 0 and covariance matrix

$$\begin{bmatrix} 1 & \rho_{13|2} \\ \rho_{13|2} & 1 \end{bmatrix}$$

iv. Denote the sample by $(\hat{X}_1, \hat{X}_3)$, then we apply $\Phi$ and $\hat{F}_1^{-1} / \hat{F}_3^{-1}$ to the sample, $\left( \hat{F}_i^{-1}(\Phi(\hat{X}_i)), \hat{F}_j^{-1}(\Phi(\hat{X}_j)) \right)$. Compute the empirical conditional mutual information for these transformed quantities given the original variable $X_2$, denoted by $\hat{I}_{13|2}$.

v. Compute the empirical conditional mutual information for the original data $(X_1, X_3)$ given $X_2$, denoted by $I_{13|2}$.

vi. Choose the parameter $\rho_{13|2}$ such that $(\hat{I}_{13|2} - I_{13|2})^2$ is minimized. This can be accomplished using an optimization method. In particular, the method we used is a combination of golden section search and successive parabolic interpolation.

c. After each $\dfrac{m(m-1)}{2}$ edge is fitted with a bivariate Gaussian copula, the d-vine copula distribution is fitted.

The fitted multivariate distribution may be sample from as follow,

a. Draw a sample from the d-vine copula distribution fitted above using a d-vine sampling algorithm. Denote this sample by $(U_1,...,U_m)$.

b. Apply the empirical marginal quantile function used in fitting the copula to the sample, $\left( \hat{F}_1^{-1}(U_1),...,\hat{F}_m^{-1}(U_m) \right)$, to obtain the synthetic data values.

In addition to, or as an alternative to, the fitting of copulas, the data synthesis may use a sequential data synthesis process. Let's say we have five variables, A, B, C, D, and E. The generation is performed sequentially, and therefore a sequence is necessary. Various criteria can be used to choose a sequence. For example, the sequence may be defined as A -> E -> C -> B -> D.

Let the prime notation indicate that the variable is synthesized. For example, A' means that this is the synthesized version of A. The following are the steps for sequential generation:

- Sample from the A distribution to get A'

- Build a model F1: E ~ A

- Synthesize E as E'= F1(A')

- Build a model F2: C ~ A + E

- Synthesize C as C' = F2(A', E')

- Build a model F3: B~A+E+C

- Synthesize B as B' = F3(A', E' ,C')

- Build a model F4: D~A+E+C+B

- Synthesize D as D' = F4(A', E', C', B')

The process can be thought of as having two steps, fitting and synthesis. Initially a series of models {F1, F2, F3, F4} are fitted. These models make up the generator. Then these models can be used to synthesize data according to the scheme illustrated above.

As described above, various data synthesis techniques may be used to generate a synthetic population dataset based on a dataset that is to be shared and was sampled from a larger population dataset. The synthetic population dataset may be sampled to generate a synthetic microdata dataset. Both the synthetic population dataset and the synthetic microdata dataset are then used to estimate the risk of re-identification for the dataset being shared. If the re-identification risk is too high, the dataset to be shared can be adjusted, for example by performing further anonymization.

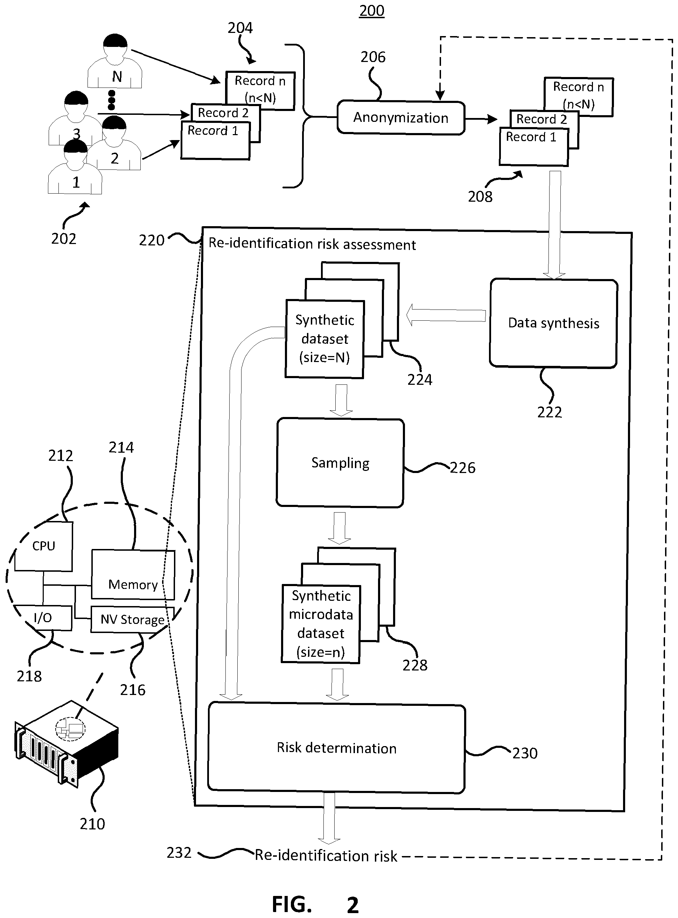

Fig. 2 depicts the anonymization and sharing of datasets. A number of individuals 202 may form a population of size $N$. A number, $n$, of records 204 are collected from or about the individuals 202. The records 204 may comprise, for example, health related information for the individual as well as other personally identifiable information such as name, birthdate, social insurance number, address, etc. Sharing of the dataset of records 204 may be desirable, for example to support research, training of artificial intelligence models, or other purposes. However, in order to share the personal information it may be necessary to anonymize the dataset so that individual records cannot be linked back to the associated individual. An anonymization process 206 may be applied to the dataset records 204. The anonymization process may include various techniques including sampling the dataset records 204 to generate a subset of records 208 to be shared, removing variables, such as names, as well as modifying values such as changing an specific address to a city. Regardless of the particular anonymization process used to anonymize the dataset records 204, a dataset of records 208 will be generated that can be shared. As depicted, the dataset to be shared 208 may comprise $n$ records while the full population dataset may comprise $N$ records, where $N > n$. In FIG. 2, the dataset to be shared 208 is depicted as having the same number of records, namely $n$, as the original dataset collected from the population of individuals; however, it is possible for the dataset to be shared 208 to have fewer records than the original dataset 204.

Although an anonymization process may be applied to the dataset 204 in order to generate the dataset 208 to be shared, it may not be sufficiently anonymous, or difficult to associate an individual with a record, for particular purposes. It will be appreciated that sharing of different data may require different levels of anonymity. For example, personal health data may require a much greater level of anonymity compared to personal shopping information. Accordingly, the dataset to be shared, namely the dataset of records 208, can be processed to determine a risk associated with re-identification.

The re-identification risk may be assessed by a server, computer or group of servers/computers, depicted as server 210. The server 210 comprises one or more processors 212 that can execute instructions stored in a memory 214. The server may include additional components including for example one or more non-volatile storage components 216 and one or more input/output (I/O) interfaces 218. The memory 214, and/or the non-volatile storage 216, may store instructions which when executed by the processor 210 configure the server 210 to provide re-identification risk assessment functionality 220.

The re-identification risk assessment functionality 220 receives or is otherwise provided with, the records 208 to be assessed. The records 208 are used by data synthesis functionality 222 that generates a synthetic dataset 224. The synthetic dataset comprises N records and provides a synthetic version of the complete population dataset. As described above, the data synthesis functionality 222 may synthesize the data using various methods including for example Gaussian copula fittings, d-vine copula fittings, combinations of the two, etc. Sampling functionality 226 is used to sample the synthesized data and generate a smaller dataset, which may be referred to as a synthetic microdata dataset 228. The sampling may be done randomly to select a set number of records, or possibly a percentage of the synthetic dataset records such as 5% or 10% to provide a synthetic microdata dataset 228 of size $n$. Both the synthetic population dataset 224 and the synthetic microdata dataset 228 are used by risk determination functionality 230 in order to determine a re-identification risk of the dataset 208 being shared. The risk may be determined based on the sizes of equivalent classes in the synthetic population dataset 224. For each record in the synthetic microdata dataset 228, the size of the equivalent class in the synthetic population dataset 224 is determined, which may be determined by counting the number of records in the synthetic population dataset 224 having the same quasi identifiers as the record being considered. The equivalent class sizes in the synthetic microdata dataset 228 may also be determined. The equivalent class sizes may be used to determine the re-identification risk 232. The re-identification risk 232 may be used in determining whether the dataset 208 is safe to share. If the re-identification risk 232 is high, the anonymization process 206 may be adjusted to further anonymize the dataset and the re-identification risk may be determined again.

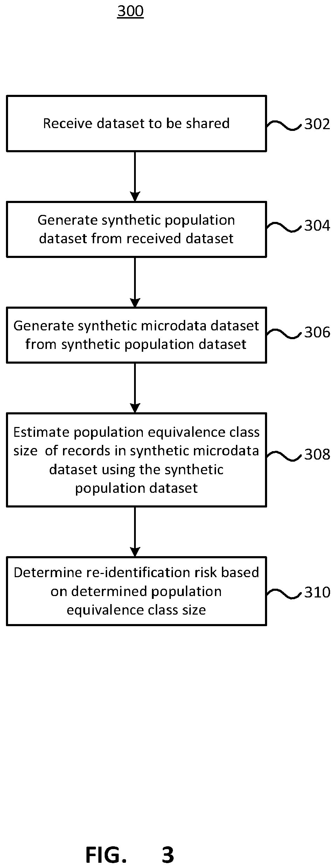

FIG. 3 depicts a method of estimating a re-identification risk of a dataset by an attacker. The method 300 includes receiving a dataset to be shared (302). The dataset to be shared may be a subset of a larger population dataset. The received dataset is used to generate a synthetic population dataset (304). The synthetic population dataset may be generated using various techniques including for example copula fittings. The synthetic population dataset is used to generate a synthetic microdata dataset (306), which may be done by randomly sampling the synthetic population dataset. With the synthetic datasets generated, equivalence class sizes within the synthetic population are determined for the records within the sampled synthetic microdata dataset (308). The equivalence class sizes may be used to determine re-identification risk of the dataset that is to be shared (310).

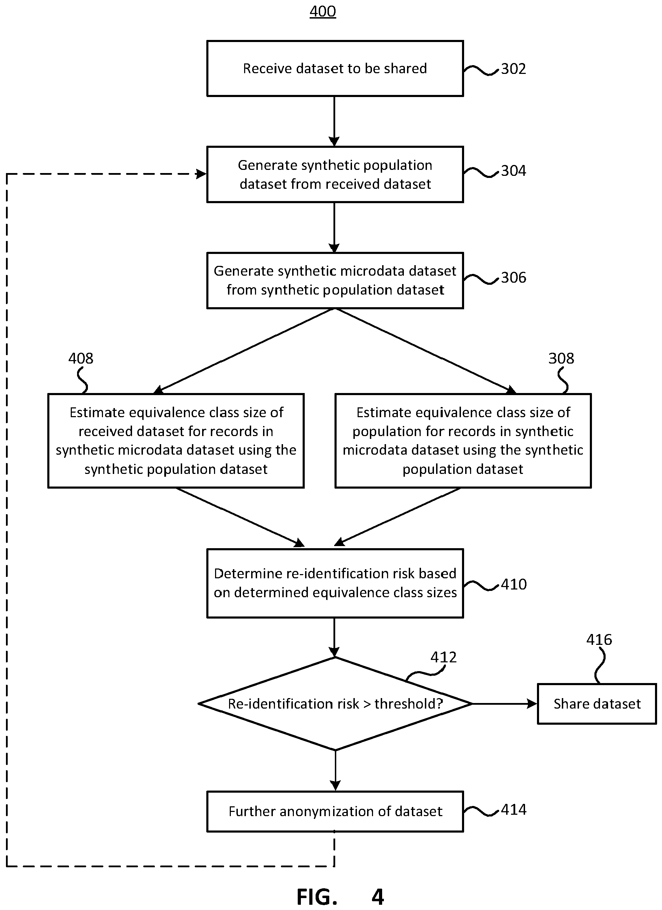

FIG. 4 depicts a further method of estimating a re-identification risk of a dataset by an attacker. The method 400 is similar to the method 300 described above and similarly includes receiving a dataset to be shared (302), which is used to generate a synthetic population dataset (304) that is sampled to generate a synthetic microdata dataset (306). With the synthetic datasets generated, equivalence class sizes within the synthetic population dataset are determined for the records within the sampled synthetic microdata dataset (308). In addition to determining the equivalent class sizes within the synthetic population dataset the method 400 also estimates the equivalent class sizes within the synthetic microdata dataset (408) for each record in the synthetic microdata dataset. Both the equivalent class sizes may be used in determining the re-identification risk of the dataset being shared (410). Once the re-identification risk is determined, it can be compared to a risk threshold (412). If it is above the threshold (Yes at 412) the dataset being shared may be further anonymized (414) and the further anonymized dataset can be re-assessed for the re-identification risk. If the risk is below the threshold (No at 412), the risk of re-identification may low enough for the dataset to be shared (416).

The re-identification risk assessment of datasets described above was tested by simulation to compare various methods including previous baseline method and different methods described herein. The datasets used in the simulations are noted in Table 1 and the quasi-identifiers used for each dataset are shown in Tables 2 through 5 below.

| Name | Description | Number of Records |
|---|---|---|
| Adult dataset | UCI Machine Learning Repository Adults dataset; this dataset is included as a reference point since it is often used in the machine learning and disclosure control community | 48,842 |
| Texas hospitals 2007 dataset | The Texas hospital discharge dataset (public dataset from the Texas Department of Health and Social Services) | 50,000 records selected from the original 2,244,997 records |
| Washington 2007 hospitals dataset | The Washington state hospital discharge dataset | 50,000 records selected from the original 644,902 records |
| Nexoid dataset | An on-line survey on COVID-19 exposure | 50,000 records selected from the original 968,408 records |

Table 2: For the Adult dataset, all 11 variables were included in the quasi identifiers

| Variables | Description |
|---|---|
| age | Age of the individual |
| workclass | Work status of the individual |
| education | Education level of the individual |
| marital_status | Marital status of the individual |
| occupation | Occupation of the individual |
| relationship | Type of relationship |
| race | Race of the individual |
| sex | Gender of the individual |
| native_country | Country of origin of the individual |
| capital | Capital gain obtained |
| income | Income level |

Table 3: For the Texas 2007 hospitals dataset, 9 variables were used for the quasi identifiers

| Variables | Description |
|---|---|
| DISCHARGE | Year and quarter of discharge. |
| PAT_STATE | State of the patient's mailing address in Texas and contiguous states. |
| PAT_COUNTRY | Country of patient's residential address. |
| COUNTY | FIPS code of patient's county. |

(continued)

| Variables | Description |
|---|---|
| SEX_CODE | Gender of the patient as recorded at date of admission or start of care. |
| ADMIT_WEEKDAY | Code indicating day of week patient is admitted |
| LENGTH_OF_STAY | Length of stay in days |
| PAT_AGE | Code indicating age of patient in days or years on date of discharge. |
| RACE | Code indicating the patient's race |

Table 4: For the Washington 2007 hospitals dataset, 9 variables were used for the quasi identifiers

| Variables | Description |
|---|---|
| AGE | Age in years at admission |
| AGEDAY | Age in days (when age < 1 year) |
| AGEMONTH | Age in months (when age < 11 year) |
| PSTCO2 | Patient state/country code, possibly derived from ZIP Code |
| ZIP | Patient ZIP Code |
| FEMALE | Indicator of sex |
| AYEAR | Admission year |
| AMOMTH | Admission month |
| AWEEKEND | Admission day is a weekend |

Table 5: For the Nexiod dataset, 8 variables were used for the quasi identifiers.

| Variable | Description |
|---|---|
| country | Country of origin of the individual |
| sex | Gender of the individual |
| age | Age of the individual |
| height | Height of the individual |
| weight | Weight of the individual |
| income | Income level of the individual |
| race | Race of the individual |
| immigrant | Immigrant status of the individual |

In total six estimators were simulated, including the entropy estimator (entropy) as described in "Routes for Breaching and Protecting Genetic Privacy," of Erlich et al., Nat Rev Genet, vol. 15, no. 6 which is incorporated herein by reference, the hypothesis testing estimator (hypothesis test) as described in "Protecting Privacy Using k-Anonymity," of El Emam et al., Journal of the American Medical Informatics Association, vol. 15 which is incorporated herein by reference, the Benedetti-Franconi estimator (italian) as described in "Statistical Disclosure Control for Microdata - Methods and Applications in R," of Tempi, Aug. 24, 2018 which is incorporated herein by reference, the Gaussian copula estimator (gaussian copula) described herein, the d-vine copula (d-vine copula) described herein, and the average of these two latter copula estimators (average) described herein.

The simulation varied the selected quasi-identifiers and the sampling fraction. The number of quasi-identifiers was varied and a subset of variables of that size was selected as the quasi-identifiers. For example, if there were $m$ quasi-identifiers, then a random number of quasi-identifiers from 1 to $m$ was selected for each simulation run. Within the same simulation run a sampling fraction between 0.01 and 0.99 was selected (drawn from a uniform distribution).

For each subset of quasi-identifiers randomly selected a new sub-sample was created and used to generate a new synthetic dataset to compute the risk from. The synthetic datasets were generated using each of the two copula methods. A total of 1000 study points were generated for each data synthesis method.

The full dataset size (as noted in Table 1) that was sampled from was used as the population size (the $N$ value). The estimate error was computed as $\hat{B}$-$B$, which allows the extent of over and under estimation to be evaluated. The error was then plotted against the true risk value $B$. Given that there were multiple simulations per true risk value $B$, a box-and-whisker plot was used to represent the error median and variation at each true risk value. Deviation from zero indicates the extent of the estimate error.

The descriptive visualization for presenting the results was not accompanied by formal statistical tests to compare the error at different true risk values $\hat{B}$ because in a simulation context such testing is not informative. One can just increase the number of simulation study points to get statistically significant differences across the board. Therefore, the useful information is the median error and the variation of the error (in the form of inter-quartile range).

Two sensitivity analyses were performed. The main parameter for the copula estimators is the population size, $N$. A sensitivity analysis was performed to determine the extent to which the accuracy of the risk estimate is affected by errors in that value. In practice, the exact population value may not be known with precision. Therefore the risk estimation error was computed as the $N$ value used in the synthesis is increase and decreased by up to 30%. This will tell us how much errors as large as 30% in the value of $N$ influence accuracy. While the direction of the impact of changes in $N$ can be anticipated in advance, the magnitude of that change is not known, and the objective was to empirically evaluate the magnitude of change.

For the second sensitivity analysis, it is noted that the Texas, Washington, and Nexoid datasets are larger than what was used in the current analysis. Therefore the impact of using a population larger than 50,000 was evaluated in the simulations. It was found that the size of the population did not have a material impact on the results and conclusions. Therefore, we only the results with the 50,000 population.

The results for the Texas dataset and the Nexoid dataset for a low (0.05), medium (0.3), and high (0.7) sampling fraction are provided below. These are two quite different datasets and illustrate the range of results we obtained.

The error against the true risk in 0.1 true risk increments. Some of the datasets do not have a high true risk because of the nature of the quasi-identifiers that are considered (i.e., the true risk does not necessarily go all the way up to 1), and therefore their values are presented to the highest true risk achievable.

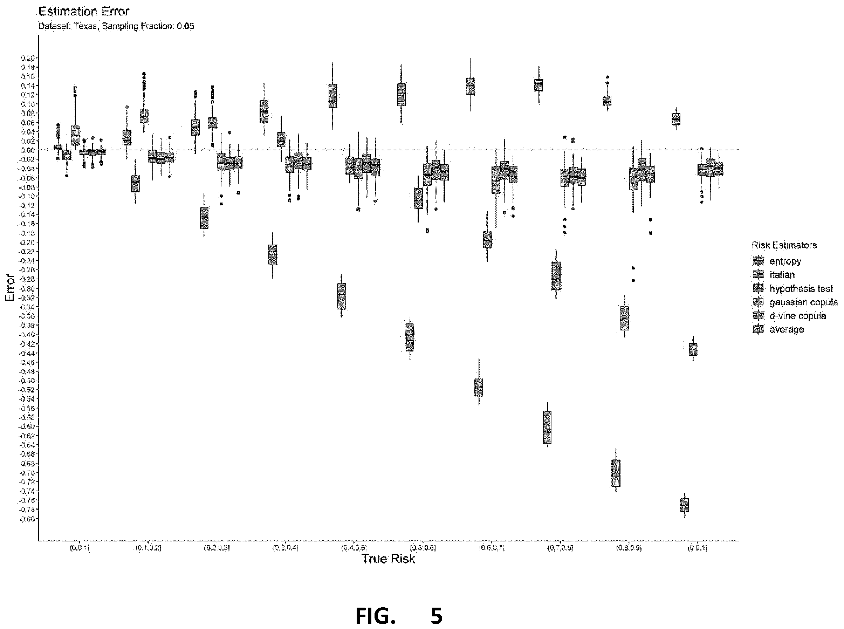

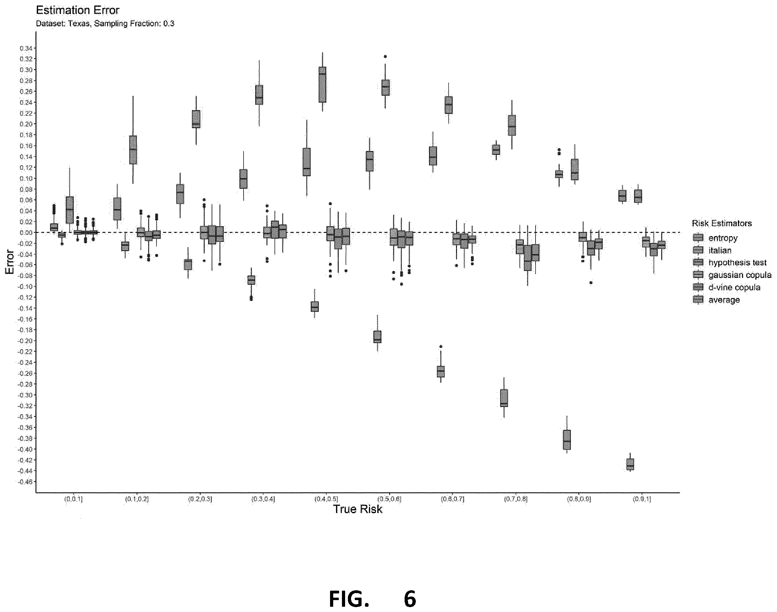

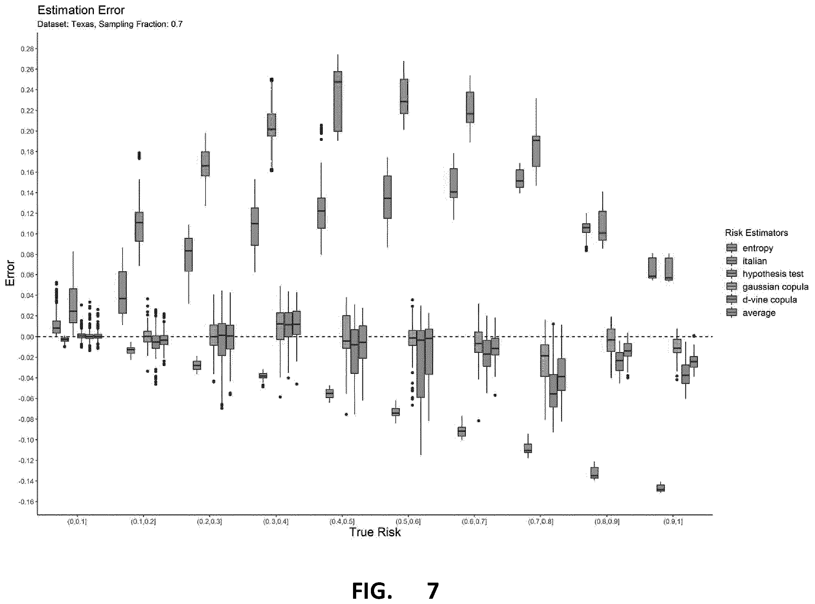

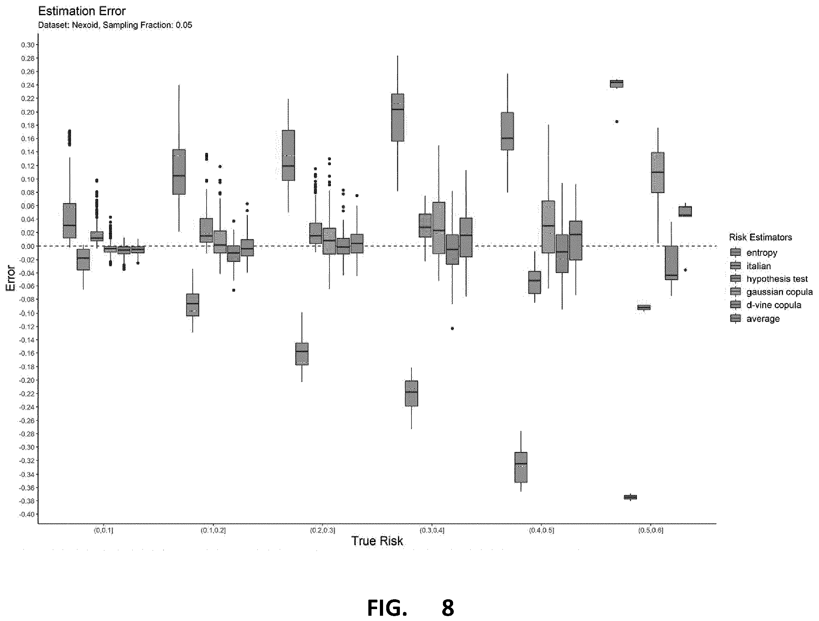

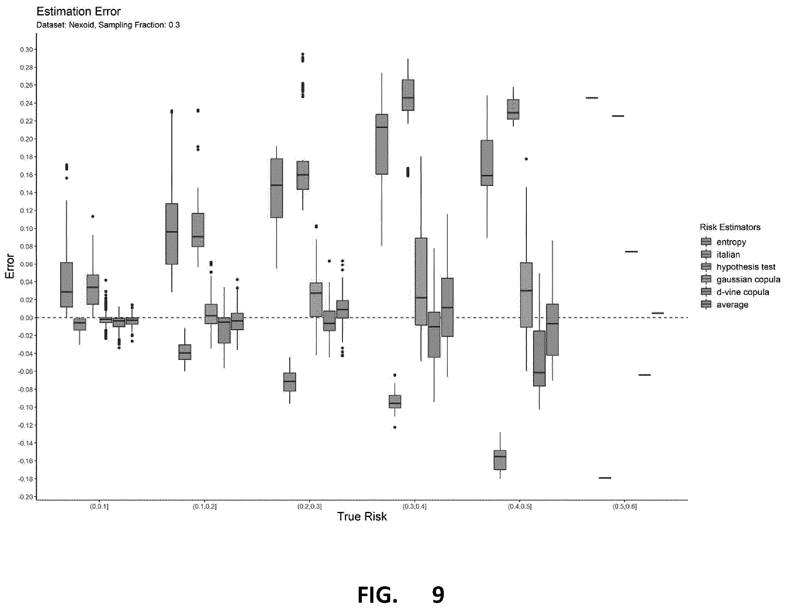

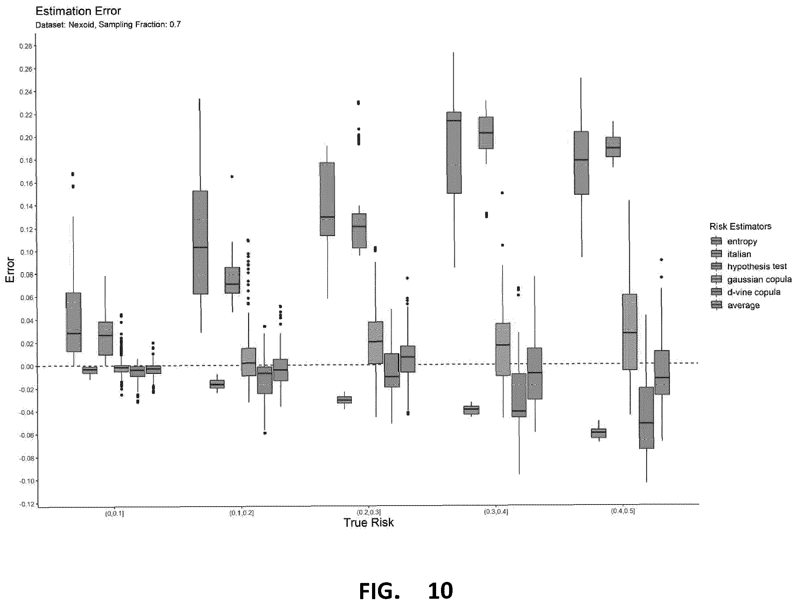

The error results for the 0.05 sampling fraction are shown in FIG. 5. These are represented as box-and-whisker plots at each category of the true risk (on the x-axis). Similarly, the results are shown for the 0.3 and 0.7 sampling fractions in FIG. 6 and FIG. 7 respectively. Equivalent results for the Nexoid dataset are shown in FIG. 8, FIG. 9, and FIG. 10 for the three sampling fractions respectively. The main pattern is consistent across all of plots. The following observations can be made.

The entropy method consistently and significantly overestimates the true risk. This means that applications of that estimator in a de-identification context will be conservative resulting in more data transformations than necessary to anonymize the data.

The Italian method consistently and significantly underestimates the true risk. This means that applications of that estimator in a de-identification context will be permissive resulting in datasets that have a higher re-identification risk than is assumed.

The hypothesis testing method underestimates the true risk for low sampling fractions and overestimates the risk for high sampling fractions. Even though its error is generally better than the previous two estimators, it is still quite high in practice when the full range of true risk is considered.

The Gaussian and d-vine copula estimators tend to perform well with quite small errors across the range of true risk values and sampling fractions. The average is better than either of the copula estimators in terms of maintaining an error less than 5% across the different datasets and sampling fractions. It is by far the best performing estimator out of the six estimators that were evaluated.

The average copula estimator provides an accurate estimate of re-identification risk that it would be practically useful for managing re-identification risk and being used as a reliable optimization criterion for de-identification algorithms. This estimator also performs better than the other methods in the literature. In particular, the average copula estimator provides the most accurate results around the commonly used 0.09 threshold, which is where such accuracy can make an important difference between whether a dataset is considered personal information or not.

The analysis shows how the accuracy is affected by errors in the value of N, which is the size of the population. The value of N is increased and decreased by up to 30%. Having a value of N that is larger than the real value results in underestimation of the risk, and having a value of N that is smaller than the real value tends to result in overestimation of the risk. The over-/ under-estimation is within the 10% range. In general, when there is uncertainty around the true value of N, it is better to err on the side of using a value of N that may be smaller than the true value. This will result in a more conservative risk estimate and will reduce the likelihood of treating a dataset as a having a lower re-identification risk than the true risk.

The estimator of re-identification risk described herein can be used to capture the match rate or the probability of success that is aligned with an actual attack (rather than a proxy). The specific attack that is modeled is the adversary selecting a record from the microdata sample and attempting to match that with a person in the real world using the quasi-identifiers.

The general approach was to create a synthetic population from the micro dataset and then sample from the synthetic population to create a synthetic sample. Using the synthetic population and synthetic sample, it was possible to compute the probability of a correct match under the sample-to-population attack.

To synthesize the population, different copula methods were used, namely a Gaussian copula and a d-vine copula, as well as an average of these two copula estimates. These were compared to three estimators in the literature: an entropy-based estimator, a Bayesian estimator, and a hypothesis testing estimator. The results show that the average of two copula methods produced the best results, with high accuracy of the re-identification probability under the considered attack. This performed better than all of the other methods that were considered and had a consistently low error rate below 5% on the datasets considered.

A sensitivity analysis was also performed on the main parameter that is used by the average copula method, the population size. The accuracy is affected by errors in this parameter. Our recommendation is to err on underestimating the value of N when there is uncertainty about its true value. This results in an overestimate of the risk and therefore gives a little more privacy protection that what is necessary.

This estimator would allow the accurate estimation of the probability of successful sample-to-population attack. The accuracy, ease of computation, and quite fast computation means that this kind of approach can be readily applied to datasets in practice.

The average copula estimator described above was used to de-identify the flatten.ca dataset, which is currently available on Physionet. This was data collected on-line from Ontario residents pertaining to their experiences with COVID-19. The Ontario dataset contained 18,903 observations, and the simulated population consisted of 13,448,494 individuals (the population of Ontario at the time). The quasi-identifiers are listed in Table 2. The sample-to-population risk was measured and the quasi-identifiers were generalized until the estimated risk was below the commonly used 0.09 threshold. The estimated sample-to-population risk after the adjustments described in Table 2 was 0.0723. The population-to-sample risk was 0.0009 for the dataset generalized as described in Table 6 below.

Table 6: The quasi-identifiers and how they were modified to ensure a low risk of re-identification.

| Variable | Generalizations |
| --- | --- |
| Date | Converted to month format |
| FSA | Forward Sortation Area, which is the first three characters of the postal code |
| Conditions | Medical conditions diagnosed |
| age_1 | Age categories: <26, 26-44, 45-64, >65 |
| travel_outside_canada | Travel outside Canada in the last 14 days (binary) |
| Ethnicity | |
| Sex | |
| tobacco_usage | |
| travel_work_school | |
| covid_results_date | Converted to month format |
| people_in_household | Removed |

Beyond ensuring that the population-to-sample risk estimates were small, the dataset was mapped to Statistics Canada census data on the Forward Sortation Area. Individuals in FSAs with small populations on the demographic quasi-identifiers (age, sex, and ethnicity) below a threshold of 11 were removed from the dataset. This provides additional conservative assurance for matches against population registries.

The process described above provides a highly accurate estimator of the success probability for an adversary who attempts to match a record selected from the dataset with an individual in the population. The average copula method coupled with the estimation approach using a synthetic population provides a low error across all sampling fractions, and even for small sampling fractions the error rate does not appreciably increase.

Using the approach described herein, it is now possible to more reliably manage re-identification risks in a manner that models real attacks from adversaries rather than using proxy or indicative metrics like the proportion of population uniqueness. Direct estimation of the match rate is more informative of actual risks.

Although certain components and steps have been described, it is contemplated that individually described components, as well as steps, may be combined together into fewer components or steps or the steps may be performed sequentially, non-sequentially or concurrently. Further, although described above as occurring in a particular order, one of ordinary skill in the art having regard to the current teachings will appreciate that the particular order of certain steps relative to other steps may be changed. Similarly, individual components or steps may be provided by a plurality of components or steps. One of ordinary skill in the art having regard to the current teachings will appreciate that the components and processes described herein may be provided by various combinations of software, firmware and/or hardware, other than the specific implementations described herein as illustrative examples.

The techniques of various embodiments may be implemented using software, hardware and/or a combination of software and hardware. Various embodiments are directed to apparatus, e.g. a node which may be used in a communications system or data storage system. Various embodiments are also directed to non-transitory machine, e.g., computer, readable medium, e.g., ROM, RAM, CDs, hard discs, etc., which include machine readable instructions for controlling a machine, e.g., processor to implement one, more or all of the steps of the described method or methods.

Some embodiments are directed to a computer program product comprising a computer-readable medium comprising code for causing a computer, or multiple computers, to implement various functions, steps, acts and/or operations, e.g. one or more or all of the steps described above. Depending on the embodiment, the computer program product can, and sometimes does, include different code for each step to be performed. Thus, the computer program product may, and sometimes does, include code for each individual step of a method, e.g., a method of operating a communications device, e.g., a wireless terminal or node. The code may be in the form of machine, e.g., computer, executable instructions stored on a computer-readable medium such as a RAM (Random Access Memory), ROM (Read Only Memory) or other type of storage device. In addition to being directed to a computer program product, some embodiments are directed to a processor configured to implement one or more of the various functions, steps, acts and/or operations of one or more methods described above. Accordingly, some embodiments are directed to a processor, e.g., CPU, configured to implement some or all of the steps of the method(s) described herein. The processor may be for use in, e.g., a communications device or other device described in the present application.

Numerous additional variations on the methods and apparatus of the various embodiments described above will be apparent to those skilled in the art in view of the above description. Such variations are to be considered within the scope.

**Claims**

1. A computer implemented method of estimating a re-identification risk by an attacker comprising:

   receiving a dataset to be shared of a population having a population size (*N*), the dataset comprising a plurality (*n<N*) of records each comprising a plurality of variables, a subset of the variables (quasi-identifiers) comprising data that may be known to the attacker;
   generating a synthetic dataset from the received dataset, the synthetic dataset comprising *N* records;
   generating a synthetic microdata dataset by sampling the synthetic dataset;
   estimating an equivalence class size in the synthetic population dataset of records in the synthetic microdata dataset;
   determining the re-identification risk based on the population equivalence class size of records in the synthetic microdata dataset.

2. The method of claim 1, wherein determining the re-identification risk is based on an estimate of a sample-to-population match rate and comprises:
   estimating the sample-to-population match rate according to:

$$\widehat{B} = \frac{1}{n}\sum_{k=1}^{n}\frac{1}{\widehat{F_k}},$$

   where:

   $\widehat{B}$ is the estimate of the sample-to-population match rate;
   *n* is the size of the synthetic microdata dataset; and

$\widehat{F_k}$ is the size of the equivalence class in the synthetic dataset that record $k$ of the synthetic microdata dataset belongs to.

3. The method of claim 2, further comprising:

estimating an equivalence class size in the synthetic microdata dataset of records in the synthetic microdata dataset,
wherein determining the re-identification risk is further based on an estimate of a population-to-sample match rate and comprises:
estimating the population-to- sample match rate according to:

$$\hat{A} = \frac{1}{N} \sum_{k=1}^{n} \frac{1}{f_k},$$

where:

$\hat{A}$ is the estimate of the population-to-sample match rate;
$N$ is the size of the synthetic dataset;
$n$ is the size of the synthetic microdata dataset; and
$f_k$ is the size of the equivalence class in the synthetic microdata dataset that record $k$ of the synthetic microdata dataset belongs to.

4. The method of claim 3, wherein the re-identification risk is determined according to:

$$\max(\hat{A}, \hat{B}).$$

5. The method of claim 3, wherein the re-identification risk is determined according to:

$$1 - (1 - \hat{A})(1 - \hat{B}).$$

6. The method of any one of claims 1 to 5, wherein generating the synthetic dataset from the received microdata dataset uses a copula fitting process.

7. The method of claim 6, wherein the copula is a Gaussian copula or a D-vine copula.

8. The method of any one of claims 1 to 5, wherein generating the synthetic dataset from the received microdata dataset uses an average of a Gaussian copula fitting process and a D-vine copula fitting process.

9. The method of any one of claims 1 to 5, wherein generating the synthetic dataset from the received microdata dataset uses at least one of:

a sequential decision tree process;
a copula fitting process;
a Gaussian copula fitting process;
a d-vine copula fitting process;
a deep learning process; and
Bayesian Networks.

10. The method of any one of claims 1 to 9, further comprising:

determining if the re-identification risk is acceptable for sharing of the received microdata dataset of the population;
when the re-identification risk is not acceptable for sharing, modifying the received microdata dataset and determining the re-identification risk of the modified microdata data set.

11. A non-transitory computer readable medium having instructions, which when executed by a processor of a computer configure the computer to perform a method of estimating a re-identification risk by an attacker according to any one of claims 1 to 10.

12. A computing system comprising:

a processor for executing instructions; and
a memory for storing instructions, which when executed by the processor configure the computing system to perform a method of estimating a re-identification risk by an attacker according to any one of claims 1 to 10.

**FIG. 1**

FIG.    2

300

```
┌─────────────────────────────┐
│  Receive dataset to be shared│ ⟿ 302
└─────────────────────────────┘
              │
              ▼
┌─────────────────────────────┐
│  Generate synthetic population│ ⟿ 304
│  dataset from received dataset│
└─────────────────────────────┘
              │
              ▼
┌─────────────────────────────┐
│ Generate synthetic microdata │ ⟿ 306
│  dataset from synthetic       │
│  population dataset           │
└─────────────────────────────┘
              │
              ▼
┌─────────────────────────────┐
│Estimate population equivalence│ ⟿ 308
│class size of records in       │
│synthetic microdata dataset    │
│using the synthetic population │
│dataset                        │
└─────────────────────────────┘
              │
              ▼
┌─────────────────────────────┐
│Determine re-identification    │ ⟿ 310
│risk based on determined       │
│population equivalence class   │
│size                           │
└─────────────────────────────┘
```

FIG.    3

400

FIG.    4

Estimation Error
Dataset: Texas, Sampling Fraction: 0.05

Risk Estimators

entropy
italian
hypothesis test
gaussian copula
d-vine copula
average

FIG. 5

FIG. 6

EP 3 955 151 A1

FIG. 7

FIG. 8

Estimation Error
Dataset: Nexoid, Sampling Fraction: 0.3

Risk Estimators
- entropy
- italian
- hypothesis test
- gaussian copula
- d-vine copula
- average

FIG. 9

FIG. 10

Europäisches Patentamt
European Patent Office
Office européen des brevets

# EUROPEAN SEARCH REPORT

Application Number

EP 21 19 1141

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anco Hundepool ET AL: "Handbook on Statistical Disclosure Control Version 1.01", , 1 March 2007 (2007-03-01), XP055268917, Retrieved from the Internet: URL:http://citeseerx.ist.psu.edu/viewdoc/download?doi=10.1.1.135.3606&rep=rep1&type=pdf [retrieved on 2016-04-27] * page 31 - page 33 * * pages 18,58 * * Section 3.2.9.5 * * Section 3.2.1 * | 1-12 | INV. G06F21/62 H04W12/02 G06N20/00 |
| X | FIDA KAMAL DANKAR ET AL: "A method for evaluating marketer re-identification risk", 20100322; 1077952576 - 1077952576, 22 March 2010 (2010-03-22), pages 1-10, XP058313319, DOI: 10.1145/1754239.1754271 ISBN: 978-1-60558-990-9 * Section 2.2 * | 1-12 | |
| X | ROCHER LUC ET AL: "Estimating the success of re-identifications in incomplete datasets using generative models", NATURE COMMUNICATIONS, vol. 10, no. 1, 23 July 2019 (2019-07-23), XP055785023, DOI: 10.1038/s41467-019-10933-3 Retrieved from the Internet: URL:http://www.nature.com/articles/s41467-019-10933-3> * page 2 * | 1-12 | |

TECHNICAL FIELDS SEARCHED (IPC)

G06F
H04W
G06N

The present search report has been drawn up for all claims

| Place of search | Date of completion of the search | Examiner |
|---|---|---|
| Munich | 20 December 2021 | Frank, Mario |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                  

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63064686

**Non-patent literature cited in the description**

- **ERLICH et al.** Routes for Breaching and Protecting Genetic Privacy. *Nat Rev Genet,* vol. 15 (6
- **EL EMAM et al.** Protecting Privacy Using k-Anonymity. *Journal of the American Medical Informatics Association,* vol. 15

- **TEMPI.** *Statistical Disclosure Control for Microdata - Methods and Applications in R,* 24 August 2018